# EUROPÄISCHE PATENTANMELDUNG

(11) **EP 3 287 222 A1**
(43) Veröffentlichungstag der Anmeldung: **28.02.2018**
(21) Anmeldenummer: 16185240.5
(22) Anmeldetag: 23.08.2016
(51) Int. Cl.: B23F 15/06

(54) **VERFAHREN ZUR BEARBEITUNG DER ZAHNFLANKEN VON PLANKUPPLUNGS-WERKSTÜCKEN IM SEMI-COMPLETING VERFAHREN**

(71) Anmelder: Klingelnberg AG, 8050 Zürich (CH)
(72) Erfinder: Kreh, Wilhelm, 42477 Radevormwald (DE)
(74) Vertreter: Heusch, Christian

(57) **Zusammenfassung**

Kontinuierliches Semi-Completing-Verfahren zur Bearbeitung der Zahnflanken eines Plankupplungswerkstücks (10) mit einem Verzahnwerkzeug mit mehreren Messern, die je eine Innenschneide und eine Aussenschneide aufweisen. Das Verfahren kann die Schritte umfassen:
a) Einstellen einer ersten Maschineneinstellung und Drehantreiben des Plankupplungswerkstücks (10) um eine Werkstückrotationsachse (R2) und gekoppeltes Drehantreiben des Verzahnwerkzeugs um eine Werkzeugrotationsachse, wobei
- sich durch das gekoppelte Drehantreiben des Plankupplungswerkstücks (10) mit dem Verzahnwerkzeug eine Teilbewegung des Plankupplungswerkstücks (10) mit dem Verzahnwerkzeug ergibt, und
- wobei die erste Maschineneinstellung so definiert ist und das gekoppelte Drehantreiben so erfolgt, dass eine Innenschneide eines m-ten Messers des Verzahnwerkzeugs eine konvexe Flanke einer ersten Zahnlücke des Plankupplungswerkstücks (10) bearbeitet und dass eine Innenschneide eines weiteren Messers, das nach dem m-ten Messer folgt, eine konvexe Flanke einer darauffolgende Zahnlücke des Plankupplungswerkstücks (10) bearbeitet, bis alle konvexen Flanken aller Zahnlücke fertig bearbeitet sind,

b) Einstellen einer zweiten Maschineneinstellung und Drehantreiben des Plankupplungswerkstücks (10) um die Werkstückrotationsachse (R2) und gekoppeltes Drehantreiben des Verzahnwerkzeugs um die Werkzeugrotationsachse, wobei
- sich durch das gekoppelte Drehantreiben des Plankupplungswerkstücks (10) mit dem Verzahnwerkzeug eine Teilbewegung des Plankupplungswerkstücks (10) mit dem Verzahnwerkzeug ergibt, und
- wobei die zweite Maschineneinstellung so definiert ist und das gekoppelte Drehantreiben so erfolgt, dass eine Aussenschneide eines n-ten Messers des Verzahnwerkzeugs eine konkave Flanke einer Zahnlücke des Plankupplungswerkstücks (10) bearbeitet und dass eine Aussenschneide (21.a)eines weiteren Messers, das nach dem n-ten Messer folgt, eine konkave Flanke einer darauffolgende Zahnlücke des Plankupplungswerkstücks (10) bearbeitet, bis alle konkaven Flanken aller Zahnlücke fertig bearbeitet sind.

## Beschreibung

### Gebiet der Erfindung

Gegenstand der Erfindung ist ein Verfahren zum Bearbeiten der Verzahnung von Plankupplungen, wobei es sich konkret um ein Semi-Completing Verfahren handelt.

Plankupplungen sind Maschinenelemente, die einen Kegelwinkel haben, der 90 Grad beträgt. Die Plankupplungen werden auch als Stirnzahnkupplungen bezeichnet. Plankupplungen kommen z.B. in Triebwerken, an den Achsen von Fahrzeugen und z.B. auch an deren Nockenwellen zum Einsatz. Sie werden auch in Windkraftanlagen eingesetzt. Plankupplungen können als permanente Kupplungen eingesetzt werden, die sich durch eine starre, kraftschlüssige Verbindung zweier Kupplungselemente (auch Kupplungshälften genannt) auszeichnen. Die beiden Kupplungshälften können in diesem Fall miteinander verschraubt oder anderweitig verbunden sein. Plankupplungen können aber auch als trennbare Kupplungen (Schaltkupplungen genannt) eingesetzt werden.

Die Zähne der Plankupplungen sollten eine hohe Genauigkeit aufweisen und eine maximale Lastübertragung, d.h. eine hohe Tragfähigkeit, ermöglichen. Die Zähne von Plankupplungen haben einen bogenförmigen (spiralförmigen) Zahnverlauf, d.h. die Flankenlängslinien sind bogenförmig. Beim Paaren zweier Kupplungselemente kommen gleichzeitig alle konkaven Zahnflanken eines ersten Kupplungselements mit allen konvexen Zahnflanken des zweiten Kupplungselements zum Eingriff. Dabei wird je eine linksspiralige mit je einer rechtsspiraligen Kupplungshälfte gepaart.

Plankupplungen können auf verschiedenen Wegen hergestellt werden, wie im Folgenden beschrieben wird. Man unterscheidet Plankupplungen, die nach dem Klingelnberg Zyklo-Palloid-Verfahren und nach dem Oerlikon-Verfahren hergestellt wurden. Außerdem gibt es Plankupplungen, die als Curvic® Couplings (Firma Gleason, USA) bezeichnet werden.

Das Zyklo-Palloid-Verfahren ist ein kontinuierliches Verfahren. Die Zähne von Plankupplungen, die nach dem Zyklo-Palloid-Verfahren hergestellt wurden, haben eine veränderliche Zahnhöhe. Beim Zyklo-Palloid-Verfahren kommen zwei Messerköpfe zum Einsatz, die exzentrisch ineinander gelagert sind. Nicht alle Maschinen sind geeignet zwei Messerköpfe in der genannten Art und Weise aufzunehmen. Die Messer, die beim Zyklo-Palloid-Verfahren eingesetzt werden, sind in Gruppen zusammengefasst und sie sind auf einem kurzen Abschnitt einer mehrgängigen Spirale am Messerkopf angeordnet. Während sich beim Zyklo-Palloid-Verfahren die Messerköpfe und das Werkstück kontinuierlich drehen, durchläuft jede neue Messergruppe jeweils eine nachfolgende Zahnlücke des zu bearbeitenden Werkstücks. Den konvexen und den konkaven Zahnflanken der Plankupplungen sind beim Zyklo-Palloid-Verfahren getrennte Messer zugeordnet. Diese getrennten Messer sind jedoch auf demselben Flugkreisradius angeordnet, wenn man von einem kleinen Korrekturwert absieht, der notwendig ist, um eine Längsballigkeit zu erzeugen.

Die Messerköpfe, die im Rahmen des Oerlikon-Verfahrens als Werkzeuge zum Einsatz kommen, haben einen komplexen Aufbau.

Beim Curvic® Coupling-Verfahren hängen der Radius des Werkzeugs, die Zähnezahl der Plankupplung und der Durchmesser der Plankupplung voneinander ab. Bei dem Curvic® Coupling-Verfahren werden stets zwei Zahnlücken gleichzeitig geschnitten. Anschließend werden die Zähne geschliffen. Es ist ein wesentlicher Nachteil der Curvic® Couplings, dass diese zwingend eine ganzzahlige Zähnezahl aufweisen müssen. Außerdem haben die Zähne der Curvic® Couplings eine konstante Zahnhöhe.

Bei der industriellen Herstellung von Plankupplungen geht es darum einfache und schnelle Verfahren zu finden, da diese Faktoren einen Einfluss auf die Wirtschaftlichkeit haben.

Es stellt sich also die Aufgabe, ein Verfahren zur industriellen Herstellung von Plankupplungen bereit zu stellen, das mehr Freiheitsgrade bietet und das flexibler einsetzbar ist. Außerdem soll das Verfahren wirtschaftlicher sein als die bisher bekannten Verfahren.

Gemäss Erfindung wird ein Verfahren bereit gestellt, das sich durch die folgenden Merkmale auszeichnet.
- Es handelt sich bei dem Verfahren um ein kontinuierliches Semi-Completing-Verfahren,
- es kommt ein Verzahnwerkzeug zum Einsatz, das mehrere Messer umfasst, die je eine Innenschneide und eine Aussenschneide aufweisen, und
- das Verfahren umfasst die folgenden Schritte a) und b), die in der Bearbeitungsreihenfolge a) und b) oder in der Bearbeitungsreihenfolge b) und a) durchgeführt werden:
   a) Einstellen einer ersten Maschineneinstellung und Drehantreiben des Plankupplungswerkstücks um eine Werkstückrotationsachse und gekoppeltes Drehantreiben des Verzahnwerkzeugs um eine Werkzeugrotationsachse, wobei
      - sich durch das gekoppelte Drehantreiben des Plankupplungswerkstücks mit dem Verzahnwerkzeug eine Teilbewegung des Plankupplungswerkstücks mit dem Verzahnwerkzeug ergibt, und
      - wobei die erste Maschineneinstellung so definiert ist und das gekoppelte Drehantreiben so erfolgt, dass eine Innenschneide eines m-ten Messers des Verzahnwerkzeugs eine konvexe Flanke einer ersten Zahnlücke des Plankupplungswerkstücks bearbeitet und dass eine Innenschneide eines weiteren Messers, das nach dem m-ten Messer folgt, eine konvexe Flanke einer darauffolgenden Zahnlücke des Plankupplungswerkstücks bearbeitet, bis alle konvexen Flanken aller Zahnlücken fertig bearbeitet sind,
   b) Einstellen einer zweiten Maschineneinstellung und Drehantreiben des Plankupplungswerkstücks um die Werkstückrotationsachse und gekoppeltes Drehantreiben des Verzahnwerkzeugs um die Werkzeugrotationsachse, wobei
      - sich durch das gekoppelte Drehantreiben des Plankupplungswerkstücks mit dem Verzahnwerkzeug eine Teilbewegung des Plankupplungswerkstücks mit dem Verzahnwerkzeug ergibt, und
      - wobei die zweite Maschineneinstellung so definiert ist und das gekoppelte Drehantreiben so erfolgt, dass eine Aussenschneide eines n-ten Messers des Verzahnwerkzeugs eine konkave Flanke einer Zahnlücke des Plankupplungswerkstücks bearbeitet und dass eine Aussenschneide eines weiteren Messers, das nach dem n-ten Messer folgt, eine konkave Flanke einer darauffolgenden Zahnlücke des Plankupplungswerkstücks bearbeitet, bis alle konkaven Flanken aller Zahnlücken fertig bearbeitet sind.

Weitere vorteilhafte Ausgestaltungen der Erfindung sind den abhängigen Ansprüchen zu entnehmen.

Die Schritte a) und b) des Verfahrens der Erfindung können bei allen Ausführungsformen in der Bearbeitungsreihenfolge a) und b) oder in der Bearbeitungsreihenfolge b) und a) durchgeführt werden, wie bereits erwähnt.

Die Bearbeitungsreihenfolge kann bei Bedarf auch gewechselt werden, um z.B. für einen gleichmäßigeren Verschleiß am Verzahnwerkzeug zu sorgen.

Um einen gleichmässigeren Verschleiß der Aussenschneiden und der Innenschneiden der Messer des Verzahnwerkzeugs zu erzielen, kann bei allen Ausführungsformen bei der Bearbeitung zweier Plankupplungswerkstücke eine der folgenden Bearbeitungsreihenfolgen angewendet werden: a), b), b) a) oder b), a), a), b).

Das Verfahren der Erfindung wird vorzugsweise bei einem zuvor unverzahnten Werkstück angewendet. In diesem Fall schneiden die Aussenschneiden und die Innenschneiden ins volle Material, sobald das Verzahnwerkzeug eine Eintauchbewegung gepaart mit den gekoppelten Drehbewegungen ausführt.

Bei der Bearbeitungsreihenfolge a) und b) werden während der Bearbeitung der konvexen Flanken mit den Innenschneiden (auch als Fertigbearbeitung bezeichnet) die konkaven Flanken des Plankupplungswerkstücks mit den Aussenschneiden schrupp-bearbeitet (auch als Vorbearbeitung bezeichnet). Beim Schruppbearbeiten dienen die Aussenschneiden als Nebenschneiden.

Bei der Bearbeitungsreihenfolge b) und a) werden während der Bearbeitung der konkaven Flanken mit den Aussenschneiden (auch als Fertigbearbeitung bezeichnet) die konvexen Flanken des Plankupplungswerkstücks mit den Innenschneiden schrupp-bearbeitet (auch als Vorbearbeitung bezeichnet). Beim Schruppbearbeiten dienen die Innenschneiden als Nebenschneiden.

Gemäß Erfindung erfolgt das Verstellen der Maschineneinstellung bei allen Ausführungsformen vorzugsweise erst nach dem Heraustauchen des Verzahnwerkzeugs aus dem Plankupplungswerkstück. In diesem Fall ist für das Verstellen der Maschineneinstellung - z.B. von einer ersten Maschineneinstellung zu einer zweiten Maschineneinstellung (oder umgekehrt) - ausreichend Platz und es kann nicht zu Kollisionen des Verzahnwerkzeugs mit dem Plankupplungswerkstück kommen. Es ist ein Vorteil dieses Ansatzes, dass für die Relativbewegungen, die beim Verstellen der Maschineneinstellung durchgeführt werden, mehr Freiheitsgrade zur Verfügung stehen als bei einem Ansatz, bei dem das Verstellen der Maschineneinstellung im eingetauchten Zustand erfolgt. Es ist ein weiterer Vorteil des Verstellens der Maschineneinstellung ausserhalb des Plankupplungswerkstücks, dass im Prinzip der Maschinensteuerung nur die Parameter der beiden Maschineneinstellungen vorgegeben werden müssen. Das konkrete Ausführen der Relativbewegungen kann in diesem Fall der Maschinensteuerung überlassen werden und die Maschinensteuerung kann die Relativbewegungen anhand ihrer Standardprogrammierung ausführen. Falls hingegen das Verstellen der Maschineneinstellung im Eingriff mit dem Plankupplungswerkstück erfolgen soll, so sollten der Maschineneinstellung genaue Vorgaben (z.B. durch die Angabe mehrerer Bahnpunkte) für das Ausführen der Relativbewegungen gemacht werden, um Kollisionen zu vermeiden.

Aus den genannten Gründen folgt das Verfahren der Erfindung daher vorzugsweise bei der Bearbeitungsreihenfolge a) und b) dem folgenden Schema:
- im Schritt a) taucht das drehangetriebene Verzahnwerkzeug in das Material des Plankupplungswerkstück ein, nachdem die erste Maschineneinstellung eingestellt wurde,
- am Ende des Schritts a) taucht das Verzahnwerkzeug aus dem Plankupplungswerkstück heraus, und
- im Schritt b) taucht das drehangetriebene Verzahnwerkzeug in das Material des Plankupplungswerkstücks ein, nachdem die zweite Maschineneinstellung eingestellt wurde.

Aus den genannten Gründen folgt das Verfahren der Erfindung daher vorzugsweise bei der Bearbeitungsreihenfolge b) und a) dem folgenden Schema:
- im Schritt b) taucht das drehangetriebene Verzahnwerkzeug in das Material des Plankupplungswerkstück ein, nachdem die zweite Maschineneinstellung eingestellt wurde,
- am Ende des Schritts b) taucht das Verzahnwerkzeug aus dem Plankupplungswerkstück heraus, und
- im Schritt a) taucht das drehangetriebene Verzahnwerkzeug in das Material des Plankupplungswerkstücks ein, nachdem die erste Maschineneinstellung eingestellt wurde.

Bei allen Ausführungsformen mit der Bearbeitungsreihenfolge a) und b) wird nach dem Schritt a) und vor dem Schritt b) die erste Maschineneinstellung in die zweite Maschineneinstellung überführt, wobei dieses Überführen vorzugsweise vorgenommen wird, nachdem das Verzahnwerkzeug aus dem Plankupplungswerkstück zurückgezogen wurde.

Bei allen Ausführungsformen mit der Bearbeitungsreihenfolge b) und a) wird nach dem Schritt b) und vor dem Schritt a) die zweite Maschineneinstellung in die erste Maschineneinstellung überführt wird, wobei dieses Überführen vorzugsweise vorgenommen wird, nachdem das Verzahnwerkzeug aus dem Plankupplungswerkstück zurückgezogen wurde.

Bei allen Ausführungsformen sind die Drehbewegungen des Verzahnwerkzeugs um die Werkzeugrotationsachse und des Plankupplungswerkstücks um die Werkstückrotationsachse miteinander gekoppelt. Diese Kopplung der beiden Drehbewegungen wird hier als gekoppeltes Drehantreiben bezeichnet. Das gekoppelte Drehantreiben erfolgt so, dass sich jeweils nur ein Messer des Verzahnwerkzeugs durch eine Zahnlücke bewegt und sich z.B. das nächste Messer durch die nächste Lücke bewegt. Das Koppeln der beiden Drehbewegungen kann auf mechanischem Wege erfolgen und/oder das Koppeln kann von einer CNC Steuerung der Maschine auf elektronischem Wege vorgegeben werden (elektronische Kopplung genannt).

Es ergibt sich bei allen Ausführungsformen durch das gekoppelte Drehantreiben des Plankupplungswerkstücks mit dem Verzahnwerkzeug eine (relative) Teilbewegung des Plankupplungswerkstücks mit dem Verzahnwerkzeug. Diese Teilbewegung führt dazu, dass bei einem Teil der Ausführungsformen eine Innenschneide eines Schneidkopfs eine konvexe Zahnflanke spanabhebend (fertig-)bearbeitet, während eine Aussenschneide des Schneidkopfs eine konkave Zahnflanke derselben Zahnlücke spanabhebend (vor-)bearbeitet. Danach wird mit einer Innenschneide eines anderen Schneidkopfs die konvexe Zahnflanke einer nachfolgenden Zahnlücke spanabhebend (fertig-)bearbeitet, während die Aussenschneide dieses anderen Schneidkopfs eine konkave Zahnflanke dieser Zahnlücke spanabhebend (vor-) bearbeitet.

Dadurch, dass beim kontinuierlichen Semi-Completing Verfahren der Erfindung je eine Innenschneide und eine Aussenschneide an einem gemeinsamen Schneidkopf oder Messer sitzt, werden in der Teilebene des Plankupplungswerkstücks automatisch Radiendifferenzen erzwungen. Diese Radiendifferenzen wurden bisher bei Lösungen, die getrennte Innenschneider und Aussenschneider einsetzen, durch den Folgewinkel zwischen dem Innenschneider und Aussenschneider beeinflusst. Durch die genannten Radiendifferenzen ergibt sich beim Verfahren der Erfindung eine Längsballigkeit an den konvexen und konkaven Zahnflanken. Gemäß Erfindung kann diese Längsballigkeit durch eine geeignete Wahl der Werkzeugneigung (Tilt genannt) relativ zum Plankupplungswerkstück angepasst werden, um so die gewünschte Längsballigkeit zu erhalten.

Typischerweise ist die Radiendifferenz und somit auch die Längsballigkeit aufgrund des Zusammenlegens der Innenschneiden und Aussenschneiden an gemeinsamen Schneidköpfen zu groß. Um die Längsballigkeit zu reduzieren, sollte daher in diesen Fällen mit einer reduzierten Werkzeugneigung gearbeitet werden. Durch das Reduzieren der Werkzeugneigung wird das Werkzeug relativ zum Plankupplungswerkstück weggeschwenkt. Dieses Wegschwenken führt dazu, dass weniger Grundwinkelkorrektur erforderlich ist, d.h. der Maschinengrundwinkel kann in diesem Fall etwas kleiner sein.

Es sind auch Ausführungsformen möglich, bei denen die Neigung so vorgegeben wird, dass der Maschinengrundwinkel Null sein kann. Dieser Sonderfall kann dann auftreten, wenn das Werkzeug relativ zum Plankupplungswerkstück ausreichend weit weggeneigt ist.

Falls die Werkzeugneigung erhöht werden muss, so wird das Werkzeug relativ zum Plankupplungswerkstück hingeschwenkt. Dieses Hinschwenken führt jedoch dazu, dass eine größere Grundwinkelkorrektur erforderlich ist.

Es ist ein Vorteil des Verfahrens der Erfindung, dass aufgrund der Tatsache, dass die konkaven und konvexen Zahnflanken getrennt bearbeitet werden, Spiralwinkelfehler durch eine Anpassung der Maschineneinstellungen korrigiert (reduziert) werden können. Ausserdem lässt sich durch das Anpassen der Maschineneinstellungen die Längsballigkeit optimal an die gewünschten Werte anpassen.

Es wird daher als ein Vorteil der Erfindung angesehen, dass das Verfahren flexibler ist als die bisherigen Verfahren. Das Verfahren der Erfindung bietet z.B. mehrere Freiheitsgrade was die Anpassung/Optimierung der Topographie der konkaven und konvexen Zahnflanken anbelangt.

Ausserdem ist das Verzahnwerkzeug der Erfindung einfacher als die bekannten zweiteiligen Systeme (wie z.B. das Zyklo-Palloid-Verfahren). Zusätzlich ist das Verzahnwerkzeug der Erfindung universeller einsetzbar, da es eine konstante Folge der Schneidköpfe respektive der Messer aufweist. Es ist ein weiterer Vorteil der Erfindung, dass durch das Zusammenlegen von Innenschneiden und Aussenschneiden in je einen Schneidkopf, respektive in ein Messer, am Umfang des Werkzeugs mehr Platz ist für die Aufnahme weiterer Schneidköpfe respektive Messer. D.h., man kann problemlos die Gangzahl erhöhen, was einer Steigerung der Produktivität entspricht.

Es geht hier um ein sogenanntes kontinuierliches Semi-Completing Verfahren, wie bereits erwähnt. Hierbei handelt es sich um ein spezielles kontinuierliches Verfahren, das gemäß Erfindung zum Fräsen der Verzahnungen von Plankupplungswerkstücken eingesetzt wird. Die beiden gegenüberliegenden Flanken einer Zahnlücke des zu bearbeitenden Plankupplungswerkstücks werden mit dem gleichen Werkzeug aber mit unterschiedlichen Maschineneinstellungen bearbeitet.

Das (Verzahn-) Werkzeug ist gemäß Erfindung mit nur einem Messertyp bestückt, wobei an jedem Messer (hier auch Schneidkopf genannt) eine Innenschneide und eine Aussenschneide angeordnet sind. Die Innenschneide und die Aussenschneide eines jeden Messers stehen daher konstruktionsbedingt in einem fest vorgegebenen Bezug zueinander. Es ist ein Vorteil dieser Konstellation, dass die Position der Innenschneide gegenüber der Aussenschneide am Messer unveränderlich ist. Derartige Messer, die beide Schneiden an einem Messerkörper aufweisen oder tragen, sind deutlich einfacher in einem Messerkopf zu montieren und zu justieren, als z.B. die unterschiedlichen Messer, die beim Curvic Coupling-Verfahren zum Einsatz kommen.

Das kontinuierliche Semi-Completing Verfahren der Erfindung kann mit einer Ein-Schnitt-Strategie eingesetzt werden, da die Plankupplungswerkstücke eine geringe Zahnhöhe (verglichen mit Kegelradwerkstücken) haben. Aufgrund der geringen Zahnhöhe muss bei einem Plankupplungswerkstück pro Zahnflanke nur relativ wenig Material abgetragen werden. Daher kann eine Zahnlücke mit nur einer Tauchbewegung in einer ersten Maschineneinstellung und mit nur einer Tauchbewegung in einer zweiten Maschineneinstellung fertig bearbeitet werden.

Das Semi-Completing Verfahren der Erfindung hat den Vorteil, dass durch dieses Verfahren Plankupplungen hergestellt werden können, die in Sachen Zähnezahl eine höhere Flexibilität haben als die eingangs genannten Curvic Couplings.

Das Semi-Completing Verfahren der Erfindung hat auch den Vorteil, dass Korrekturen (z.B. zum Erzeugen einer Balligkeit) durch die erste und/oder zweite Maschineneinstellung definiert werden. Die Balligkeit kann z.B. durch das Verändern des Neigungswinkels (Tilt-Winkels) beeinflusst werden.

Das Semi-Completing Verfahren der Erfindung hat auch den Vorteil, dass mit einem standardisierten Werkzeug, je nach Bestückung mit geeigneten Messern, mehrere unterschiedliche Werkstücke bearbeitet werden können.

Es ist ein weiterer Vorteil der Erfindung, dass sich anders als beim Stand der Technik keine Folgewinkel-Problematik ergibt, wie in den folgenden Zeilen anhand eine Bezugnahme auf vorbekannte Verfahren erläutert wird. Das eingangs genannte Oerlikon-Verfahren bietet wegen des Completing-Ansatzes keine Möglichkeit den Spiralwinkefehler durch zwei getrennte Messerkopfmittelpunkte für konvexe und konkave Zahnflanken auszugleichen. Deshalb wird beim Oerlikon-Verfahren die natürliche Folge der Messer verändert, was gleichzeitig eine Längsballigkeit der Zahnflanken erzeugt. Das führt dazu, dass Spezialmesserköpfe eingesetzt werden müssen. Beim Klingelnberg Zyklo-Palloid-Verfahren, das auch bereits erwähnt wurde, werden die beiden Messerkopf-Mittelpunkte durch ein zweiteiliges Messerkopf-Getriebe in der Bearbeitungsmaschine realisiert.

Es ist ein weiterer Vorteil der Erfindung, dass sich die Flanken der Plankupplungen weitestgehend unabhängig voneinander optimieren lassen, weil sie getrennt bearbeitet werden.

Das kontinuierliche Semi-Completing Verfahren der Erfindung hat den Vorteil, dass es auf (konventionellen) Kegelrad-Maschinen eingesetzt werden kann.

Das kontinuierliche Semi-Completing Verfahren der Erfindung hat den Vorteil, dass Werkzeuge eingesetzt werden können, die einfacher sind als bei den eingangs erwähnten Zyklo-Palloid, Oerlikon- und Curvic-Coupling Verfahren.

### ZEICHNUNGEN

Ein Ausführungsbeispiel der Erfindung wird im Folgenden unter Bezugnahme auf die Zeichnungen näher beschrieben.
- **FIG. 1A**: zeigt eine Draufsicht einer ersten Plankupplung gemäß Erfindung, wobei nur 4 Zähne und 3 Zahnlücken dargestellt sind (die 4 Zähne sind in Fig. 1A durch ein Muster hervorgehoben);
- **FIG. 1B**: zeigt einen Axialschnitt der ersten Plankupplung nach Fig. 1A;
- **FIG. 1C**: zeigt die Teilebene des Werkzeuges durch den Auslegungspunkt, wobei die Teilebene des Werkzeuges gegenüber der Teilebene des Werkstückes um den Maschinengrundwinkel κ geneigt ist;
- **FIG. 1D**: zeigt einen vergrößerten Ausschnitt der Fig 1C, wobei dieser Ausschnitt weitere Details enthält;
- **FIG. 1E**: zeigt eine perspektivische Ansicht einer einzelnen Zahnlücke einer Plankupplung der Erfindung;
- **FIG. 2**: zeigt eine Draufsicht eines Verzahnwerkzeugs der Erfindung, wobei lediglich 2 Schneidköpfe des Verzahnwerkzeugs gezeigt sind;
- **FIG. 3A**: zeigt eine Perspektivansicht eines beispielhaften Stabmessers, das in einem Verzahnwerkzeug der Erfindung zum Einsatz kommen kann;
- **FIG. 3B**: zeigt einen vergrösserten, stark schematisierten Abschnitt der Messerspitze des Stabmessers der Fig. 3A, um die positive Spitzenweite anhand dieses Beispiels darstellen zu können.

Im Rahmen der vorliegenden Erfindung werden Verzahnwerkzeuge 100 mit definierten Schneiden eingesetzt. Im Zusammenhang mit der folgenden Beschreibung werden primär Details von Ausführungsformen beschrieben, bei denen Messerkopf-Verzahnwerkzeuge 100 zum Einsatz kommen. Das Beschriebene kann aber auch auf Vollwerkzeuge 100 erweitert werden.

Das Bezugszeichen 10 wird hier sowohl für das Plankupplungswerkstück als auch für die fertig bearbeiteten Plankupplungselemente verwendet.

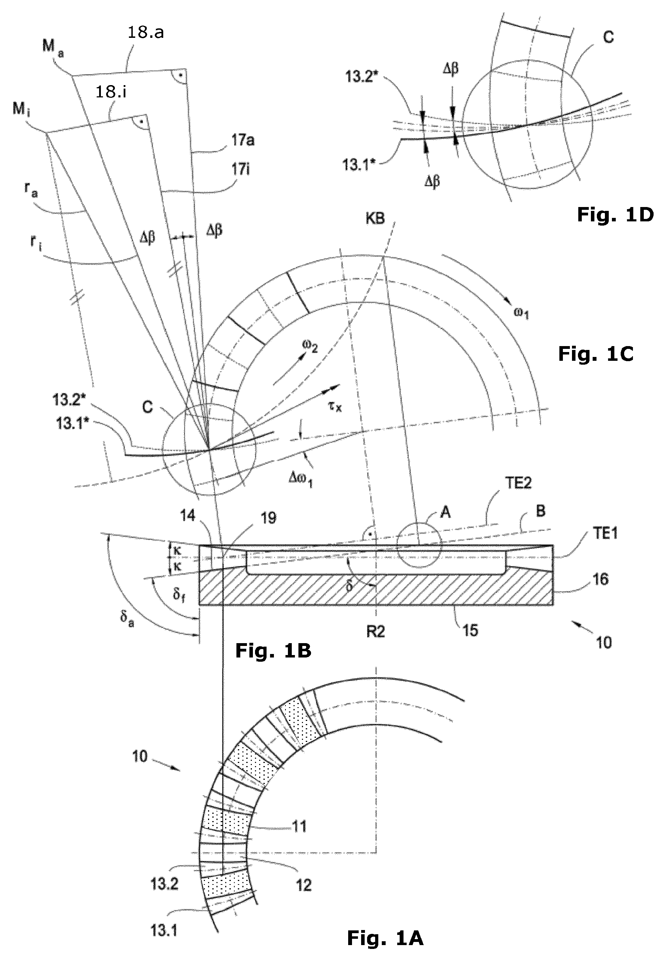

In Fig. 1A ist eine Draufsicht eines Abschnitts eines ersten Plankupplungswerkstücks 10 der Erfindung gezeigt. Die Zähne 11 sind mit einem Muster versehen, um sie optisch hervor zu heben. Es sind 4 Zähne 11 und 3 Zahnlücken 12 zu erkennen. Fig. 1B zeigt einen Axialschnitt des ersten Plankupplungswerkstücks 10. Die kurzen strichlierten Kurvenabschnitte zeigen in Fig. 1A die Flankenlinien der konkaven Flanken 13.2 und der konvexen Flanken 13.1 in der Teilebene TE1 des Plankupplungswerkstückes 10, wobei jeweils eine konkave Flanke 13.2 zusammen mit einer konvexen Flanke 13.1 einen Zahn 11 definiert. Die Werkzeugdrehbewegung ist in Fig. 1C mit ω₂ und die Werkstückdrehbewegung ω₁ mit bezeichnet. Das Verzahnwerkzeug 100 ist nicht in den Figuren 1A - 1E gezeigt. Es sind hier jedoch die Bewegungen des Verzahnwerkzeugs 100 dargestellt.

Da es sich bei dem Verfahren der Erfindung um ein kontinuierliches Semi-Completing Verfahren handelt, werden das Plankupplungswerkstück 10 und das Verzahnwerkzeug 100 gekoppelt drehangetrieben. In Fig. 1C ist von dem Verzahnwerkzeug 100 lediglich ein Abschnitt eines Kreisbogens in strichlierter Form gezeigt, der durch den Werkzeugradius rᵢ definiert und hier mit dem Bezugszeichen KB versehen ist. Der Werkzeugradius rᵢ ist den Innenschneiden 21.i des Verzahnwerkzeugs 100 zugeordnet, die zur Bearbeitung der konvexen Zahnflanken 13.1 dienen und der Werkzeugradius rₐ ist den Innenschneiden 21.a des Verzahnwerkzeugs 100 zugeordnet, die zur Bearbeitung der konkaven Zahnflanken 13.2 dienen.

Größen, die hier mit einem v bezeichnet sind, beziehen sich jeweils auf die konkaven Flanken 13.2 des Plankupplungswerkstücks 10. Größen, die hier mit einem x bezeichnet sind beziehen sich jeweils auf die konvexen Flanken 13.1 des Plankupplungswerkstücks 10. Entsprechend beziehen sich Größen, die hier mit einem i bezeichnet sind auf Innenscheiden oder Innenschleifflächen und Größen, die hier mit einem a bezeichnet sind auf Außenscheiden oder Außenschleifflächen.

Es ist hier anzumerken, dass Fig. 1C den Spezialfall ohne Werkzeugneigung zeigt (d.h. hier ist τ = 0). Die Bahn KB des Verzahnwerkzeugs 100 ist daher in der Teilebene TE1 durch den Auslegungspunkt 19 (siehe Fig. 1B) ein Kreis und die Fußbahn B der Messerspitzen ist in Fig. 1B eine Gerade. Mit einer Werkzeugneigung (d.h. mit τ ± 0) wird die Bahn KB zu einer Ellipse und die Fußbahn B der Messerspitzen wird ebenfalls zu einer Ellipse. Das Verzahnwerkzeug 100 wird um den Winkel τ um den Drehvektor, der senkrecht zum Werkzeugradius steht, geneigt.

Das Rotationszentrum zur Bearbeitung der konvexen Zahnflanken 13.1 ist Mᵢ und zur Bearbeitung der konkaven Zahnflanken 13.2 ist Mₐ bezeichnet (siehe Fig. 1C). Aus der Tatsache, dass es zwei unterschiedliche Rotationszentren Mᵢ und Mₐ gibt, kann man bereits erkennen, dass die konvexen Zahnflanken 13.1 mit einer anderen Maschineneinstellung bearbeitet werden als konkaven Zahnflanken 13.2.

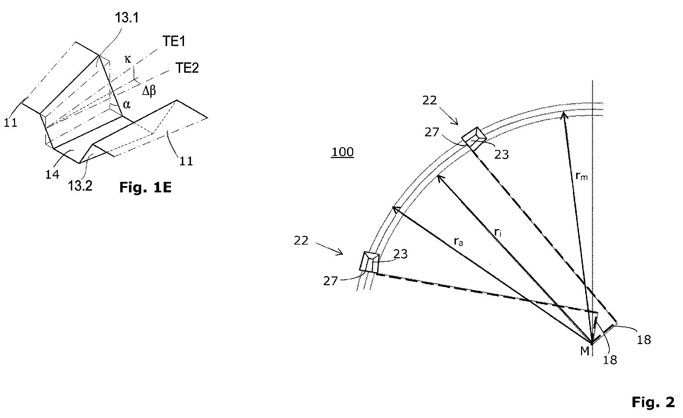

Aufgrund der Tatsache, dass bei dem Verzahnwerkzeug 100 der Erfindung je eine Aussenschneide 21.a und eine Innenschneide 21.i an einem Schneidkopf 22 zusammengelegt wurden, ergeben sich unterschiedliche Werkzeugradien rₐ > rᵢ. Außerdem muss man die Spiralwinkeldifferenz Δβ, die sich zwischen der Teilebene TE2 des Werkzeuges und der Teilebene TE1 des Werkstückes (siehe Fig. 1D) infolge der Grundwinkelkorrektur κ ergibt (falls κ ≠ 0), ausgleichen (siehe Fig. 1C). Deshalb muss man beim Schneiden der konkaven Flanken 13.2 mit einer anderen Maschineneinstellung der Maschine arbeiten als beim Schneiden der konvexen Flanken 13.1. Dadurch ergibt sich beim Schneiden der konvexen Flanken 13.1 in der Teilebene TE2 des Werkzeugs eine epizykloide Flugbahn 13.1* der Innenschneide 21.i. In Fig. 1A und Fig. 1E sind die epizykloiden Flankenlinien strichpunktiert dargestellt. Die Epizykloiden in der Werkzeugteilebene der konvexen Flanken sind in Fig. 1C und 1E fett dargestellt und weichen von den Flankenlinien der Teilebene TE1 des Werkstücks um die Spiralwinkeldifferenz Δβ ab.

Beim Schneiden der konkaven Flanken 13.2 ergibt sich aufgrund einer anderen Maschineneinstellung in der Teilebene TE2 des Werkzeugs eine epizykloide Flugbahn 13.2* der Außenschneide 21.a. In Fig. 1A und Fig. 1E sind die epizykloiden Flankenlinien strichpunktiert dargestellt. Die Epizykloiden in der Werkzeugteilebene der konkaven Flanken 13.2 sind in Fig. 1C und 1E gestrichelt dargestellt und weichen von den Flankenlinien der Teilebene TE1 des Werkstücks um die Spiralwinkeldifferenz Δβ ab.

Es ist hier festzustellen, dass die Darstellung der Figuren 1A, 1C, 1D und 1E schematisch ist. Der Verlauf der gezeigten Flugbahnen ist übertrieben dargestellt.

Die relative Lage des Verzahnwerkzeugs 100 in Bezug zum Plankupplungswerkstück 10 ist durch die jeweilige momentane Einstellung der Maschine (Maschineneinstellung genannt) definiert, in der das Plankupplungswerkstück 10 fräsend bearbeitet wird. Diese Einstellung beim Bearbeiten der konvexen Flanken 13.1 wird hier als erste Maschineneinstellung bezeichnet. Die Einstellung beim Bearbeiten der konkaven Flanken 13.2 wird hier als zweite Maschineneinstellung bezeichnet.

Die Bezeichnungen "erste Maschineneinstellung" und "zweite Maschineneinstellung" soll keine Reihenfolge vorgeben, sondern diese Bezeichnungen dienen lediglich dazu die beiden Maschineneinstellungen unterscheiden zu können.

Im Koordinatensystem des Werkzeugs 100, bewegen sich die Schneidköpfe 22 (der Messer 20) entlang von kreisförmigen Flugkreisen, deren Radius vom Abstand der Messer 20 von der Werkzeugrotationsachse R1 bestimmt ist. Details sind der Fig. 2 zu entnehmen, wo zwei Schneidköpfe 22, respektive Messer 20 eines Verzahnwerkzeugs 100 und das Rotationszentrum M des Verzahnwerkzeugs 100 in einer Draufsicht gezeigt sind. Der Werkzeugradius der Innenschneiden wird auch hier mit rᵢ und der Werkzeugradius der Aussenschneiden mit rₐ bezeichnet, wie bereits erwähnt. Die Schneidspitzen 23 aller Schneidköpfe 22 sitzen auf einem gemeinsamen Flugkreis, dessen Radius mit rₘ bezeichnet wird.

Da das Werkzeug 100 beim Bearbeiten der konkaven und konvexen Flanken gegenüber dem Plankupplungswerkstück 10 schräg gestellt ist (durch Hinneigen oder Wegneigen, definiert durch den Neigungswinkel τ), bewegen sich die Schneidköpfe 22 beim Drehantreiben ω₂ des Verzahnwerkzeugs 100 entlang elliptischer Flugbahnen, wenn man deren Bewegung aus der Position des Plankupplungswerkstücks 10 betrachtet. Aufgrund der Teilbewegung (verursacht durch das gekoppelte Drehen) des Plankupplungswerkstücks 10 mit dem Verzahnwerkzeug 100, ergeben sich Zahnflanken am Plankupplungswerkstück 10, die, wie bereits erwähnt, die Form einer Epizykloide haben. Beim Verfahren der Erfindung sind die beiden Drehbewegungen ω₁ und ω₂ so gekoppelt, dass sich jeweils nur ein Schneidkopf 22 durch eine Zahnlücke 12 bewegt. Der nächste Schneidkopf 22 des Verzahnwerkzeugs 100 bewegt sich durch die nächste Zahnlücke 12 des Plankupplungswerkstücks 10. Damit der Spanwinkel der Spanfläche 27 der Schneidköpfe 22 beim Schneiden des Materials des Plankupplungswerkstücks 10 in etwa Null Grad entspricht, sind die Schneidköpfe 22 mit einem Versatz am Verzahnwerkzeug 100 angeordnet. Dieser Versatz ist in Fig. 2 durch die beiden strichlierten Linienzüge 18 dargestellt. In Fig. 1C sind die entsprechenden Versatzlinien mit 18.i und 18.a bezeichnet.

Das Rotationszentrum M des Plankupplungswerkstücks 10 entspricht dem Durchtrittspunkt der Werkzeugrotationsachse R1 durch die Zeichenebene der Fig. 2. Es ist zu beachten, dass das Verzahnwerkzeug 100 in beiden Maschineneinstellungen geneigt sein kann, um so eine schräg verlaufende Bahn B (siehe Fig. 1B) vorzugeben, wie noch beschrieben wird. Diese Neigung wird hier durch den Maschinengrundwinkel κ definiert.

Gemäß Erfindung werden in der ersten Maschineneinstellung z.B. alle konvexen Zahnflanken 13.1 der Zahnlücken 12 des (nicht vorverzahnten) Plankupplungswerkstücks 10 fertig bearbeitet. Dieses Fertigbearbeiten der konvexen Zahnflanken 13.1 erfolgt mit den Innenschneiden 21.i des Werkzeugs 100. Während die Innenschneide 21.i eines Schneidkopfs 22 eine konvexe Zahnflanke 13.1 fertig bearbeitet, führt die Aussenschneide 21.a desselben Schneidkopfs 22 eine Vorbearbeitung (auch Schrupp-Bearbeitung genannt) der konkaven Zahnflanke 13.2 derselben Zahnlücke 12 durch. In der zweiten Maschineneinstellung werden dann z.B. alle konkaven Zahnflanke 13.2 der Zahnlücken 12 des (nicht vorverzahnten) Plankupplungswerkstücks 10 fertig bearbeitet.

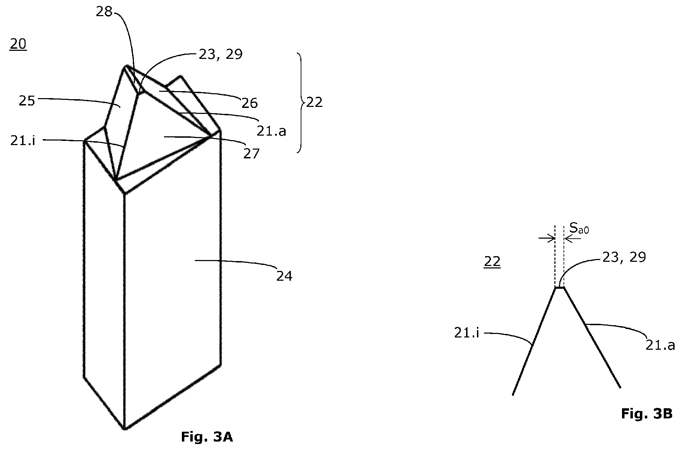

Es ist darauf zu achten, dass die Dimension des Schneidkopfs 22 (speziell die Lage der Innenschneide 21.i und der Aussenschneide 21.a, sowie die Spitzenweite sₐ₀, wie in Fig. 3B anhand eines Beispiels schematisch gezeigt) und die Maschinenkinematik so vorgegeben werden, dass die Aussenschneide 21.a beim Vorbearbeiten der konkaven Zahnflanke 13.2 nicht zu weit in das Material des Plankupplungswerkstücks 10 schneiden, da die endgültige Flankenform erst mit der zweiten Maschineneinstellung fertigt bearbeitet wird.

Die erste Maschineneinstellung zeichnet sich gemäß Erfindung z.B. durch die folgenden Kriterien oder Merkmale aus:
o in der ersten Maschineneinstellung werden alle Innenschneiden 21.i relativ zum Plankupplungswerkstück 10 entlang einer ersten elliptischen Flugbahn und alle Aussenschneiden 21.a relativ zum Plankupplungswerkstück 10 entlang einer zweiten elliptischen Flugbahn bewegt. In Fig. 1C bewegen sich alle Messer um das Zentrum Mᵢ auf einem Kreis;
o die erste elliptische Flugbahn liegt konzentrisch zu der zweiten elliptischen Flugbahn, d.h. die erste elliptische Flugbahn spannt zusammen mit der zweiten elliptischen Flugbahn eine gemeinsame Ebene auf;
o es ergibt sich an denjenigen Zahnflanken, die in der ersten Maschineneinstellung bearbeitet werden, aufgrund der gekoppelten Drehbewegungen des Werkzeugs 100 und des Werkstücks 10 eine epizykloide Zahnflanke.

Gemäß Erfindung wird eine zweite Maschineneinstellung in der Maschine eingestellt, um die konkaven Zahnflanken 13.2 fertig zu bearbeiten.

Die zweite Maschineneinstellung unterscheidet sich von der ersten Maschineneinstellung und sie zeichnet sich gemäß Erfindung z.B. durch die folgenden Kriterien oder Merkmale aus:
∘ in der zweiten Maschineneinstellung werden alle Aussenschneiden 21.a relativ zum Plankupplungswerkstück 10 entlang einer dritten elliptischen Flugbahn bewegt. In Fig. 1C bewegen sich alle Messer um das Zentrum Mₐ auf einem Kreis;
o die dritte elliptische Flugbahn hat einen effektiven Radius, der grösser ist als der effektive Radius der zweiten elliptischen Flugbahn.
∘ Solange die Werkzeugneigung τ bei der Bearbeitung der konvexen und der konkaven Flanke gleich ist, handelt es sich bei der Ebene, die durch die dritte elliptische Flugbahn aufgespannt wird, um eine Ebene, die zu der gemeinsamen Ebene, aufgespannt durch die erste elliptische Flugbahn und die zweite elliptische Flugbahn, parallel verläuft. Ohne Werkzeugneigung τ (d.h. falls τ = 0) sind diese Ebenen gleich.
o Zu Optimierungszwecken können die Werkzeugneigung τx der konvexen Flanke und τv der konkaven Flanke bei allen Ausführungsformen unterschiedlich sein.

Wie bereits angedeutet, werden die Schneidköpfe 22, respektive die Messer 20 des Verzahnwerkzeugs 100 vorzugsweise bei allen Ausführungsformen entlang einer schrägen Bahn B (siehe Fig. 1B) durch die Zahnlücken 12 der Plankupplungswerkstücke 10 geführt. Dieser Aspekt ist beim Vorgeben der ersten und der zweiten Maschineneinstellung zu berücksichtigen.

Falls man ein konstantes Zahnkopfspiel erreichen möchte, ist es sinnvoll beim Fertigverzahnen der konkaven Flanken und beim Fertigverzahnen der konvexen Flanken mit demselben Verlauf der schrägen Bahn B zu arbeiten. Zu Optimierungszwecken kann jedoch die schräge Bahn B beim Fertigverzahnen der konkaven Flanken leicht anders verlaufen als beim Fertigverzahnen der konvexen Flanken.

Die Plankupplung 10 der Erfindung zeichnet sich durch folgende Merkmale aus. Sie hat bei allen Ausführungsformen einen Teilkegelwinkel δ, der 90 Grad beträgt. In Fig. 1B ist die Teilebene TE1 durch eine strichpunktierte Linie dargestellt, die senkrecht zur Werkstückrotationsachse R2 verläuft.

Die Plankupplung 10 der Erfindung zeichnet sich bei allen Ausführungsformen insbesondere durch die folgenden Merkmale aus:
a) sie hat Zähne 11 mit veränderlicher Zahnkopfhöhe, wie man in Fig. 1B und 1E erkennen kann;
b) die Zähne 11 sind konisch in Zahnhöhenrichtung, wie man in Fig. 1B erkennen kann;
c) die Zahnlücken 12 haben eine Fußebene, respektive einen Zahngrund 14, der geneigt ist, wie man in Fig. 1B und 1E erkennen kann. Die Neigung des Zahngrunds 14 ergibt sich daraus, dass bei Bedarf beim Verfahren der Erfindung ein korrigierter Maschinengrundwinkel κ so eingestellt werden kann, dass die Schneidköpfe 22, bzw. die Messer 20 des Verzahnwerkzeugs 100 entlang einer schrägen Bahn B (wie bereits erwähnt) durch die Zahnlücken 12 der Plankupplung 10 geführt werden. Diese schräge Bahn B liegt in einem Axialschnitt der Plankupplung 10 (siehe Fig. 1B) schräg zur Teilebene TE1. Der Fußkegelwinkel δ_{f} am Zahngrund 14 beträgt hier δ_{f} = δ - κ. Die schräge Bahn B, respektive der Maschinengrundwinkel κ, kann so gewählt werden, dass ein rückwärtiges Anschneiden der Plankupplung 10 durch weiterlaufende Schneidköpfe 22 bzw. Messer 20 vermieden wird. In Fig. 1B ist im Bereich A zu erkennen, dass die Messerspitzen 23 so entlang der schrägen Bahn B durch den 3-dimensionalen Raum geführt werden, dass die Messerspitzen 23 nur im Bereich der momentan zu bearbeitenden Zahnlücken Material des Plankupplungswerkstücks 10 abtragen.

Die weiteren Details der Plankupplung 10 der Figuren 1A bis 1E sind nicht erfindungscharakteristisch und sind daher nur als Beispiele zu verstehen. Die gezeigte Plankupplung 10 hat z.B. eine rückwärtige Einbaufläche 15, die komplett eben sein kann. An der Ferse ist zwischen der Mantelfläche 16 und der Einbaufläche 15 in diesem Beispiel keine Übergangsfläche vorgesehen, wie das teilweise üblich ist. Die Mantelfläche 16 geht hier also mit einem rechten Winkel in die Einbaufläche 15 über. Der Kopfkegelwinkel δₐ ist bei dem gezeigten Beispiel grösser als 90 Grad und der Fußkegelwinkel δ_{f} ist kleiner als 90 Grad. Die Zahnhöhe nimmt von der Ferse zur Zehe (d.h. von außen nach innen) kontinuierlich ab. Es gibt jedoch auch Ausführungsformen der Erfindung, bei denen der Kopfkegelwinkel δₐ gleich 90 Grad beträgt (hier jedoch nicht gezeigt).

Gemäss Erfindung kommt vorzugsweise bei allen Ausführungsformen ein Stirnmesserkopf als Messerkopf-Verzahnwerkzeug 100 zum Einsatz. Der Stirnmesserkopf ist mit mehreren Stabmessern 20 bestückt, die stirnseitig aus dem Verzahnwerkzeug 100 herausragen. Ein Stabmesser 20 hat bei allen Ausführungsformen vorzugsweise eine Form, wie in Fig. 3A beispielhaft gezeigt. Das Stabmesser 20 weist einen Schaft 24 auf. Die Form des Schafts 24 ist so gewählt, dass das Stabmesser 20 sicher und genau in einer entsprechenden Messernut oder -kammer des Messerkopf-Verzahnwerkzeugs 100 befestigt werden kann. Der Querschnitt des Schafts 24 kann zum Beispiel rechteckig oder polygonal sein.

Im Kopfbereich (hier als Schneidkopf 22 bezeichnet) des Stabmessers 20, befinden sich beispielweise eine erste Freifläche 25, eine zweite Freifläche 26, eine (gemeinsame) Spanfläche 27, eine Kopffreifläche 28, eine Innenschneide 21.i, eine Aussenschneide 21.a und eine Kopfschneide 29.

Die Spanfläche 27 schneidet sich mit der ersten Freifläche 25 in einer virtuellen Schnittlinie, die in etwa dem Verlauf der Innenschneide 21.i entspricht, oder die genau mit dem Verlauf der Innenschneide 21.i übereinstimmt. Die Spanfläche 27 schneidet sich mit der zweiten Freifläche 26 in einer virtuellen Schnittlinie, die in etwa dem Verlauf der Aussenschneide 21.a entspricht, oder die genau mit dem Verlauf der Aussenschneide 21.a übereinstimmt.

Die Spanfläche 27 muss jedoch keine ebene Fläche sein, wie in Fig. 3A anhand einer vereinfachten Darstellung gezeigt.

Die Schneidköpfe 22, respektive die Messer 20 sind bei allen Ausführungsformen so mit einem Versatz gegenüber dem Rotationszentrum M angeordnet, dass die Spanflächen 27 in Bezug zur Epizykloide einen Spanwinkel von Null aufweisen. Nach Fig. 1C wird die Innenschneider 21.i um 18.i von der gestrichelten Linie nach der Linie 17i versetzt. Die Linie 17i steht senkrecht auf der Epizykloide. Damit liegt die Spanfläche 27 ebenfalls senkrecht auf der Epizykloide. Der Spanwinkel wird so zu 0°.

Da sich je eine Innenschneide 21.i und eine Aussenschneide 21.a an einem gemeinsamen Schneidkopf 22 (respektive Messer 20) befinden, sollte der Spanwinkel = 0° durch den erwähnten Versatz sichergestellt werden.

Es geht bei der vorliegenden Erfindung, wie bereits erwähnt, um ein kontinuierliches Semi-Completing Verfahren. Die gegenüberliegenden Flanken 13.1, 13.2 des zu bearbeitenden Plankupplungswerkstücks 10 werden mit dem gleichen Werkzeug 100 aber mit unterschiedlichen Maschineneinstellungen bearbeitet. Vor, während oder nach dem Verstellen der Maschineneinstellung von der ersten zur zweiten oder von der zweiten zur ersten Maschineneinstellung, können bei allen Ausführungsformen z.B. eine Rückzugsbewegung und eine Zustellbewegung (Tauchbewegung) ausgeführt werden.

Vorzugsweise erfolgt das Verstellen der Maschineneinstellung bei allen Ausführungsformen erst nachdem das Werkzeug 100 aus den Zahnlücken 12 herausgefahren wurde.

Das Verfahren der Erfindung kann z.B. auf einer Kegelrad-Verzahnmaschine ausgeführt werden, wobei das Plankupplungswerkstück 10 an der Werkstückspindel und das Werkzeug 100 an der Werkzeugspindel der Kegelrad-Verzahnmaschine befestigt werden. Es gibt zahlreiche verschiedene Verzahnmaschinen (z.B. 5-Achs- und 6-Achs-Verzahnungsmaschinen), in denen das Verfahren der Erfindung durchgeführt werden kann.

Eine geeignete Verzahnmaschine ist so ausgelegt, dass sie mit dem Werkzeug 100 und dem Plankupplungswerkstück 10 genau die erwähnten gekoppelten Relativbewegungen im Eingriff des Werkzeugs 100 mit dem Plankupplungswerkstück 10 vorgibt,

Typische Grössen, die in diesem Umfeld eine spezifische Maschineneinstellung definieren können, sind
- die Lage des Rotationszentrums M relativ zur Lage des Plankupplungswerkstücks 10 (unter anderem definiert durch den Achsversatz),
- die Radiale,
- der Swivelwinkel,
- der Maschinengrundwinkel κ,
- der Neigungswinkel τ (Tiltwinkel),
- die Drehposition der Werkzeugrotationsachse R1,
- der Wälzwiegenwinkel,
- die Tiefenposition des Werkzeugs 100 relativ zu dem Plankupplungswerkstück 10.

Beim Übergang von der ersten zu der zweiten Maschineneinstellung, wird mindestens eine der genannten typischen Grössen verändert.

Das bisher Geschriebene kann auch auf Vollwerkzeuge mit festen Messern und nicht nur auf Stabmesserköpfe angewendet werden.

**Bezugszeichen:**

| | |
|---|---|
| Plankupplungswerkstück / Plankupplungselement | 10 |
| Zähne | 11 |
| Zahnlücken | 12 |
| Konkave Flanke | 13.2 |
| Angenäherter Flankenverlauf / epizykloide Flugbahn | 13.2* |
| Konvexe Flanke | 13.1 |
| Angenäherter Flankenverlauf / epizykloide Flugbahn | 13.1* |
| Zahngrund | 14 |
| Einbaufläche | 15 |
| Mantelfläche | 16 |
| Linie | 17a, 17i |
| Versatz | 18, 18.a, 18.i |
| Auslegungspunkt | 19 |
| | |
| Messer | 20 |
| Aussenschneide | 21.a |
| Innenschneide | 21.i |
| Schneidkopf | 22 |
| Schneidspitze | 23 |
| Stab/Schaft | 24 |
| erste Freifläche | 25 |
| zweite Freifläche | 26 |
| Spanfläche | 27 |
| Kopffreifläche | 28 |
| Kopfschneide | 29 |
| | |
| (Messerkopf-)Verzahnwerkzeug | 100 |
| | |
| Bereich | A |
| Profilwinkel | α |
| Bahn | B |
| Bildausschnitt | C |
| Spiralwinkelfehler | Δβ |
| Teilkegelwinkel | δ |
| Kopfkegel | δₐ |
| Fußkegelwinkel | δ_{f} |
| Maschinengrundwinkel | κ |
| Kreisbogen | KB |
| Rotationszentrum | M, Mₐ, Mᵢ |
| ganze Zahl ≥ 1 | m |
| ganze Zahl ≥ 1 | n |
| Radius der Aussenschneiden | rₐ |
| Radius der Innenschneiden | rᵢ |
| Radius der Schneidspitzen | rm |
| Werkzeug rotationsachse | R1 |
| Werkstückrotationsachse | R2 |
| Spitzenweite | Sₐ₀ |
| Teilebene des Werkstücks | TE1 |
| Teilebene des Werkzeugs | TE2 |
| Werkzeugneigung (Tilt) | τ |
| Werkzeugneigung (Tilt) beim Bearbeiten der konvexen Flanken | τₓ |
| Werkzeugneigung (Tilt) beim Bearbeiten der konkaven Flanken | τᵥ |
| Werkstückdrehbewegung | ω₁ |
| Teilungsdrehbewegung | Δω₁ |
| Werkzeugdrehbewegung | ω₂ |

## Patentansprüche

1. Verfahren zur Bearbeitung der Zahnflanken eines Plankupplungswerkstücks (10), **dadurch gekennzeichnet, dass** es sich bei dem Verfahren um ein kontinuierliches Semi-Completing-Verfahren handelt, bei dem ein Verzahnwerkzeug (100) mit mehreren Messern (20) zum Einsatz kommt, die je eine Innenschneide (21.i) und eine Aussenschneide (21.a) aufweisen und wobei das Verfahren die folgenden Schritte a) und b) umfasst, die in der Bearbeitungsreihenfolge a) und b) oder in der Bearbeitungsreihenfolge b) und a) durchgeführt werden,
a) Einstellen einer ersten Maschineneinstellung und Drehantreiben des Plankupplungswerkstücks (10) um eine Werkstückrotationsachse (R2) und gekoppeltes Drehantreiben des Verzahnwerkzeugs (100) um eine Werkzeugrotationsachse (R1), wobei
- sich durch das gekoppelte Drehantreiben des Plankupplungswerkstücks (10) mit dem Verzahnwerkzeug (100) eine Teilbewegung des Plankupplungswerkstücks (10) mit dem Verzahnwerkzeug (100) ergibt, und
- wobei die erste Maschineneinstellung so definiert ist und das gekoppelte Drehantreiben so erfolgt, dass eine Innenschneide (21.i) eines m-ten Messers (20) des Verzahnwerkzeugs (100) eine konvexe Flanke (13.1) einer ersten Zahnlücke (12) des Plankupplungswerkstücks (10) bearbeitet und dass eine Innenschneide (21.i) eines weiteren Messers (20), das nach dem m-ten Messer (20) folgt, eine konvexe Flanke (13.1) einer darauffolgende Zahnlücke (12) des Plankupplungswerkstücks (10) bearbeitet, bis alle konvexen Flanken (13.1) aller Zahnlücke (12) fertig bearbeitet sind,
b) Einstellen einer zweiten Maschineneinstellung und Drehantreiben des Plankupplungswerkstücks (10) um die Werkstückrotationsachse (R2) und gekoppeltes Drehantreiben des Verzahnwerkzeugs (100) um die Werkzeugrotationsachse (R1), wobei
- sich durch das gekoppelte Drehantreiben des Plankupplungswerkstücks (10) mit dem Verzahnwerkzeug (100) eine Teilbewegung des Plankupplungswerkstücks (10) mit dem Verzahnwerkzeug (100) ergibt, und
- wobei die zweite Maschineneinstellung so definiert ist und das gekoppelte Drehantreiben so erfolgt, dass eine Aussenschneide (21.a) eines n-ten Messers (20) des Verzahnwerkzeugs (100) eine konkave Flanke (13.2) einer Zahnlücke (12) des Plankupplungswerkstücks (10) bearbeitet und dass eine Aussenschneide (21.a) eines weiteren Messers (20), das nach dem n-ten Messer (20) folgt, eine konkave Flanke (13.2) einer darauffolgende Zahnlücke (12) des Plankupplungswerkstücks (10) bearbeitet, bis alle konkaven Flanken (13.2) aller Zahnlücke (12) fertig bearbeitet sind.

2. Verfahren nach Anspruch 1, **dadurch gekennzeichnet, dass** es sich bei dem Plankupplungswerkstück (10) um ein zuvor unverzahntes Werkstück handelt, wobei
- bei der Bearbeitungsreihenfolge a) und b) während der Bearbeitung der konvexen Flanken (13.1) mit Innenschneiden (21.i) die konkaven Flanken (13.2) des Plankupplungswerkstücks (10) mit den Aussenschneiden (21.a) schrupp-bearbeitet werden, oder
- bei der Bearbeitungsreihenfolge b) und a) während der Bearbeitung der konkaven Flanken (13.2) mit Aussenschneiden (21.a) die konvexen Flanken (13.1) des Plankupplungswerkstücks (10) mit den Innenschneiden (21.i) schrupp-bearbeitet werden.

3. Verfahren nach Anspruch 1 oder 2, **dadurch gekennzeichnet, dass** bei der Bearbeitungsreihenfolge a) und b)
- im Schritt a) das drehangetriebene Verzahnwerkzeug (100) in das Material des Plankupplungswerkstücks (10) eintaucht, nachdem die erste Maschineneinstellung eingestellt wurde,
- am Ende des Schritts a) das Verzahnwerkzeug (100) aus dem Plankupplungswerkstücks (10) heraustaucht und
- im Schritt b) das drehangetriebene Verzahnwerkzeug (100) in das Material des Plankupplungswerkstücks (10) eintaucht, nachdem die zweite Maschineneinstellung eingestellt wurde.

4. Verfahren nach Anspruch 1 oder 2, **dadurch gekennzeichnet, dass** bei der Bearbeitungsreihenfolge b) und a)
- im Schritt b) das drehangetriebene Verzahnwerkzeug (100) in das Material des Plankupplungswerkstücks (10) eintaucht, nachdem die zweite Maschineneinstellung eingestellt wurde,
- am Ende des Schritts b) das Verzahnwerkzeug (100) aus dem Plankupplungswerkstücks (10) heraustaucht und
- im Schritt a) das drehangetriebene Verzahnwerkzeug (100) in das Material des Plankupplungswerkstücks (10) eintaucht, nachdem die erste Maschineneinstellung eingestellt wurde.

5. Verfahren nach Anspruch 1 oder 2, **dadurch gekennzeichnet, dass** nach dem Schritt a) und vor dem Schritt b) die erste Maschineneinstellung in die zweite Maschineneinstellung überführt wird, wobei dieses Überführen vorgenommen wird, nachdem das Verzahnwerkzeug (100) aus dem Plankupplungswerkstück (10) zurückgezogen wurde.

6. Verfahren nach Anspruch 1 oder 2, **dadurch gekennzeichnet, dass** nach dem Schritt b) und vor dem Schritt a) die zweite Maschineneinstellung in die erste Maschineneinstellung überführt wird, wobei dieses Überführen vorgenommen wird, nachdem das Verzahnwerkzeug (100) aus dem Plankupplungswerkstück (10) zurückgezogen wurde.

7. Verfahren nach einem der Ansprüche 1 bis 6, **dadurch gekennzeichnet, dass** jedes der mehreren Messer (20) des Verzahnwerkzeugs (100) einstückig ausgeführt ist und im Bereich eines gemeinsamen Schneidkopfs (22) eine Innenschneide (21.i) und eine Aussenschneide (21.a) umfasst.

8. Verfahren nach einem der Ansprüche 1 bis 6, **dadurch gekennzeichnet, dass** das Verzahnwerkzeug (100) pro Gruppe jeweils nur ein Messer (20) umfasst, das eine Innenschneide (21.i) und eine Aussenschneide (21.a) aufweist.

9. Verfahren nach einem der Ansprüche 1 bis 8, **dadurch gekennzeichnet, dass** sich die zweite Maschineneinstellung von der ersten Maschineneinstellung durch einen oder mehrere der folgenden Grössen unterscheidet:
A1. Lage des Rotationszentrums (M, Mi, Ma) des Werkzeugs (100) relativ zur Lage des Plankupplungswerkstücks (10), und/oder
A2. Einstellung der Radiale einer Maschine, in der das Verfahren ausgeführt wird, und/oder
A3. Einstellung des Wiegenwinkels einer Maschine, in der das Verfahren ausgeführt wird, und/oder
A4. Einstellung des Tiltwinkels (τ) einer Maschine, in der das Verfahren ausgeführt wird.

10. Verfahren nach Anspruch 1 oder 2, **dadurch gekennzeichnet, dass** es sich bei dem Werkzeug (100) um ein Messerkopf-Verzahnwerkzeug (100) oder um ein Vollwerkzeug handelt, das mit mehreren Messern (20) bestückt ist oder das mehrere Messer (20) aufweist, wobei jedes Messer (20) einen Schneidkopf (22) mit einer Innenschneide (21.i) und einer Aussenschneide (21.a) aufweist, die so an dem Schneidkopf (22) angeordnet sind, dass sie eine positive Spitzenweite (sₐ₀) definieren.

11. Verfahren nach einem der Ansprüche 1 bis 9, **dadurch gekennzeichnet, dass** bei der ersten Maschineneinstellung und bei der zweiten Maschineneinstellung das Werkzeug (100, 200) gegenüber dem Plankupplungswerkstück (10) so geneigt ist, dass es entlang einer schrägen Bahn (B) durch die momentan zu bearbeitende Zahnlücke (12) des Plankupplungswerkstücks (10) geführt wird, wobei diese schräge Bahn (B) in einem Axialschnitt durch das Plankupplungswerkstück (10) im Wesentlichen parallel zum Verlauf eines Zahngrundes (14) der momentan zu bearbeitenden Zahnlücke (12) liegt.

12. Verfahren nach Anspruch 11, **dadurch gekennzeichnet, dass** der Zahngrund (14) der Zahnlücke (12) mit einem Maschinengrundwinkel (κ) gegenüber einer Stirnebene (SE) des Plankupplungswerkstücks (10) geneigt ist.

13. Verfahren nach einem der Ansprüche 1 bis 9, **dadurch gekennzeichnet, dass** die Zahnflanken des Plankupplungswerkstücks (10) im Rahmen des kontinuierlichen Semi-Completing-Verfahrens eine Balligkeit erhalten, die durch ein Neigen des Werkzeugs (100, 200) beeinflusst wird.

14. Verfahren nach einem der Ansprüche 1 bis 9, **dadurch gekennzeichnet, dass** Spiralwinkelfehler (Δβ) des Plankupplungswerkstücks (10) durch ein Ändern der ersten und/oder zweiten Maschineneinstellung ausgleichbar sind.
